# EUROPÄISCHE PATENTSCHRIFT

(11) **EP 1 924 802 B1**
(45) Veröffentlichungstag und Bekanntmachung des Hinweises auf die Patenterteilung: **27.06.2012**
(21) Anmeldenummer: 06761827.2
(22) Anmeldetag: 27.07.2006
(51) Int. Cl.: F16L 37/252, F16L 37/14

(54) **HYDRAULISCHE KUPPLUNG MIT BAJONETTVERSCHLUSS UND DRAHTFORMFEDER ZUR VERDREHSICHERUNG**
HYDRAULIC COUPLING WITH A BAYONET CONNECTION AND A WIRE-FORM SPRING FOR ROTATIONAL LOCKING
RACCORD HYDRAULIQUE À BAÏONNETTE ET RESSORT FILIFORME ANTIROTATION

(30) Priorität: 30.08.2005 DE 102005040936
(43) Veröffentlichungstag der Anmeldung: 28.05.2008
(73) Patentinhaber: Schaeffler Technologies AG & Co. KG, 91074 Herzogenaurach (DE)
(72) Erfinder: GRABENSTÄTTER, Jan, 76593 Gernsbach (DE)
(86) Internationale Anmeldenummer: PCT/DE2006/001300
(87) Internationale Veröffentlichungsnummer: WO 2007/025494

(56) Entgegenhaltungen:
- EP-A2- 1 754 906
- DE-A1- 2 429 537
- DE-U1- 8 907 814
- US-A- 2 111 859
- US-A- 2 283 975
- US-A- 5 000 614

## Beschreibung

Die vorliegende Erfindung betrifft eine hydraulische Kupplung umfassend einen Stecker sowie eine Steckbuchse zur Verbindung zweier Leitungsstränge eines hydraulischen Systems sowie einen Stecker und eine Steckbuchse für eine derartige hydraulische Kupplung.

Aus der DE 20022733 U1 ist beispielsweise eine gattungsgemäße hydraulische Kupplung bekannt, bei der der Stecker eine ringförmige Nut aufweist, die in Einbaulage durch ein U-förmiges Verriegelungselement umgriffen wird. Zur Montage der hydraulischen Kupplung wird das U-förmige Verriegelungselement durch den Stecker nach außen gedrückt und schnappt dann in die Ringnut ein. Eine derartige Verbindung ist nur durch Demontage der Steckbuchse lösbar.

Aus der US 5,000,614 ist eine weitere Hydraulische Kupplung bekannt, bei der ein im Wesentlichen U-förmiges Verriegelungselement in zwei Einschnitte der Steckbuchses eingeführt wird und einen Haltering des Steckers hintergreift.

Nachteilig an diesen bekannten Lösungen aus dem Stand der Technik ist, dass die axiale Kraft, die zur Erzielung einer geeigneten Dichtwirkung notwendig ist, durch das Verriegelungselement selbst aufzubringen ist.

In DE 24 29 537 wird dieser Nachteil durch den Einsatz eines verriegelbaren Bajonettverschluss gelöst. Diese Schrift offenbart den Oberbegriff des Anspruchs 1.

Aufgabe der vorliegenden Erfindung ist es daher, eine hydraulische Kupplung anzugeben, die eine hohe axiale Andruckkraft zwischen Stecker und Steckbuchse bewirkt und damit eine hohe Dichtwirkung bei leichter Montage ermöglicht.

Dieses Problem wird gelöst durch eine hydraulische Kupplung umfassend einen Stecker sowie eine Steckbuchse, wobei die Kupplung einen Bajonett-Verschluss umfasst, der vermittels eines mit der Kupplung verbindbaren Mittels zur Verdrehsicherung gegen Verdrehung gesichert ist. Die hydraulische Kupplung dient vorzugsweise der Verbindung zweier Leitungsstränge eines hydraulischen Systems, wobei entweder Stecker oder Steckbuchse unmittelbar an einem hydraulischen Gerät, wie z. B. einer Pumpe, einem Kolben, einem Messinstrument, angeordnet sein können. Es ist also nicht notwenig, dass Stecker und Steckbuchses jeweils mit einem Leitungsstrang verbunden sind; diese können auch unmittelbar an einem hydraulischen Gerät angeordnet sein. Unter "verbindbarem Mittel zur Verdrehsicherung" wird hier verstanden, dass das Mittel aus der Steckbuchse und dem Stecker als einzelnes Bauteil entnommen werden kann. "Verdrehsicherung" bedeutet, dass Stecker und Steckbuchse nicht mehr gegeneinander um ihre Längsachse verdreht werden können, sobald das Mittel zur Verdrehsicherung eingebracht ist.

Das Mittel zur Verdrehsicherung ist ein einsteckbares Federelement, das weiter bevorzugt eine Drahtformfeder ist. Unter "Drahtformfeder" wird hier verstanden, dass die Feder aus einem runden, ovalen oder auch rechteckigen Draht gebogen worden ist. Vorzugsweise ist vorgesehen, dass die Drahtformfeder in mindestens eine Ausnehmung der Steckbuchse einbringbar ist und in einem Freiraum des Steckers eingreift. Betrachtet man die Steckbuchse allein, so ist diese in dem Bereich, in den die Drahtformfeder eingebracht wird, mit einer axialen Bohrung versehen und verfügt über mindestens eine Ausnehmung, durch die die Drahtformfeder eingebracht werden kann. Der Stecker verfügt über mindestens einen Freiraum, in den die Drahtformfeder in Einbaulage eingreift.

Die Drahtformfeder umfasst zwei Arme, die durch einen Rücken miteinander verbunden sind, wobei die Steckbuchse einen buchsenseitigen Zapfen aufweist, der die Einschubtiefe der Drahtformfeder in der Einbaulage begrenzt. Die zwei Arme und der Rücken bilden im Wesentlichen eine U-förmige Drahtformfeder. In Einbaulage liegt der Rücken unmittelbar an dem buchsenseitigen Zapfen an. Vorzugsweise ist des Weiteren vorgesehen, dass der Stecker einen steckerseitigen Zapfen aufweist, der in Einbaulage zwischen den Armen der Drahtformfeder liegt. Dadurch wird der Stecker an einer Drehung gehindert, da er unabhängig von der Drehrichtung jeweils an einem der beiden Armen anschlägt. Zusätzlich kann die Drahtformfeder zwei abgewinkelte Enden aufweisen, die in Einbaulage an radialen Schrägen des Steckers anliegen. Die abgewinkelten Enden dienen zum einen der leichteren Montage, indem diese eine Innenröhre der Steckbuchse umgreifen und dabei die Arme auseinander drücken, bis diese in Ausbuchtungen des Steckers zu liegen kommen. Dazu ist vorzugsweise vorgesehen, dass die Drahtformfeder mindestens eine Ausbuchtung aufweist, die eine korrespondierende Ausbuchtung (die Innenröhre) des Steckers nach Art eines Clips umgreift und die Drahtformfeder in radialer Richtung festlegt.

Das eingangs genannte Problem wird auch gelöst durch einen Stecker für eine hydraulische Kupplung, wobei dieser Flügel zur Verwendung in einem Bajonett-Verschluss sowie einen Zapfen und/oder mindestens eine radiale Schräge aufweist, sowie durch eine Steckbuchse für eine hydraulische Kupplung, wobei diese eine radial verlaufende Ausnehmung zur Aufnahme eines Mittels zur Verdrehsicherung umfasst.

Im Folgenden werden Ausführungsbeispiele der Erfindung anhand der beiliegenden Zeichnungen erläutert. Dabei zeigen:
- Fig. 1: eine schematische Darstellung eines hydraulischen Systems anhand einer Kupplungsausrückvorrichtung;
- Fig. 2: eine Hydraulische Kupplung im Schnitt in der Seitenansicht;
- Fig. 3: die Hydraulische Kupplung gemäß Fig. 2 im Schnitt I-I;
- Fig. 4: die Hydraulische Kupplung gemäß Fig. 2 im Schnitt II-II.

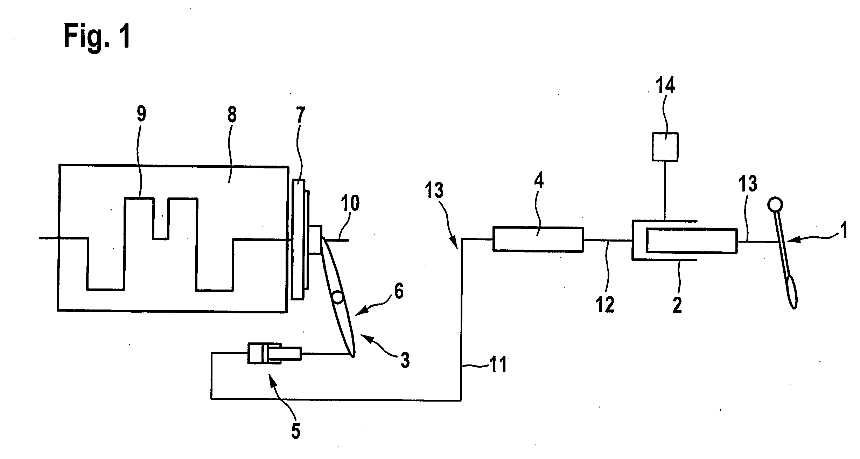

Fig. 1 zeigt in schematischer Darstellung eine mögliche Ausgestaltung eines hydraulischen Systems anhand einer Kupplungsausrückvorrichtung 3 mit einem Geberzylinder 2 und einem Nehmerzylinder 5. Eine hydraulische Kupplung (Steckverbindung) 4 ist in dem gezeigten Ausführungsbeispiel in eine diese verbindende Druckmediumsleitung 13 eingebaut und trennt diese in einen ersten Leitungsstrang 11 und einen zweiten Leitungsstrang 12 voneinander. Selbstverständlich kann die Hydraulische Kupplung 4 direkt an dem Geberzylinder 2 oder dem Nehmerzylinder 5 angeordnet sein. Des Weiteren kann in die hydraulische Kupplung gleichzeitig die Funktion eines Schwingungsfilters, beispielsweise als so genanntes "Kribbelfilter", integriert sein. Der Geberzylinder 2 ist mit einem Nachlaufbehälter 14, der bei drucklosem hydraulischem System dieses mit Hydraulikfluid als Ersatz für Hydraulikfluid, das ausgetreten oder anderweitig verbraucht wurde versorgt, verbunden.

Das Kupplungsausrücksystem 3 betätigt die Kupplung 7 hydraulisch durch Beaufschlagung des Geberzylinders 2 mittels eines Pedals 1. Statt eines Pedals kann hier auch ein elektromechanischer Aktor vorgesehen sein. Hierdurch wird mittels einer mechanischen Übertragung zwischen Pedal/Aktor und Geberzylinder 2 Druck im Geberzylinder 2 aufgebaut, der über die Druckmediumsleitung 13 bzw. den zweiten Leitungsstrang 12, die Hydraulische Kupplung 4 und den ersten Leitungsstrang 11 einen Druck im Nehmerzylinder 5 aufbaut. Der Nehmerzylinder 5 kann wie in dem gezeigten Beispiel konzentrisch um die Getriebeeingangswelle 10 angeordnet sein und sich axial an einem nicht dargestellten Getriebegehäuse abstützen und die nötige Ausrückkraft über ein Ausrücklager an der Kupplung 7, beziehungsweise an deren Ausrückelementen wie einer Tellerfeder, aufbringen. Weitere Ausführungsbeispiele können einen Nehmerzylinder 5, der über eine Ausrückmechanik 6 einen Ausrücker betätigt und außerhalb der Kupplungsglocke angeordnet ist, vorsehen, wobei dieser mittels eines in hydraulischer Verbindung mit dem Geberzylinder 2 stehenden im Nehmerzylindergehäuse untergebrachten Kolbens die Ausrückmechanik axial beaufschlagt. Zum Aufbringen der Ausrückkraft ist der Nehmerzylinder jeweils gehäusefest am Getriebegehäuse, das hier nicht näher dargestellt ist, oder an einem anderen gehäusefesten Bauteil angebracht. Die Getriebeeingangswelle 10 überträgt bei geschlossener Kupplung 7 das Drehmoment der Brennkraftmaschine 8 auf ein nicht näher dargestelltes Getriebe und anschließend auf die Antriebsräder eines Kraftfahrzeuges.

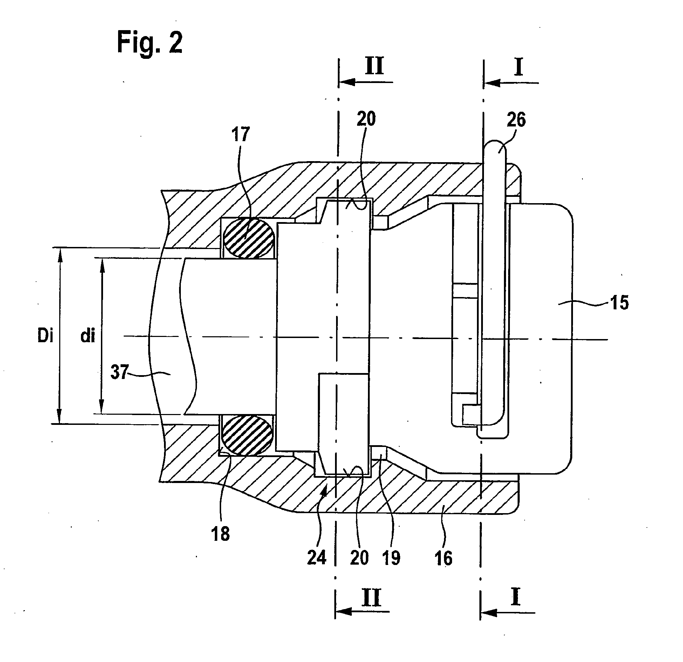

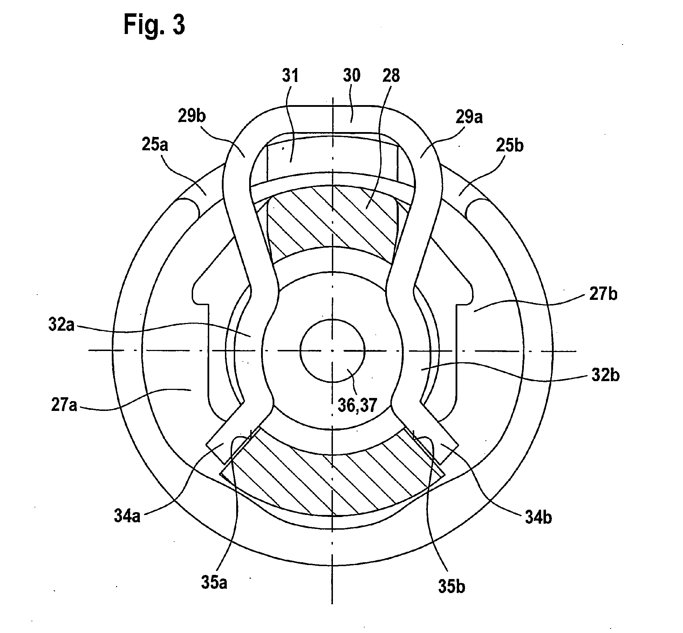

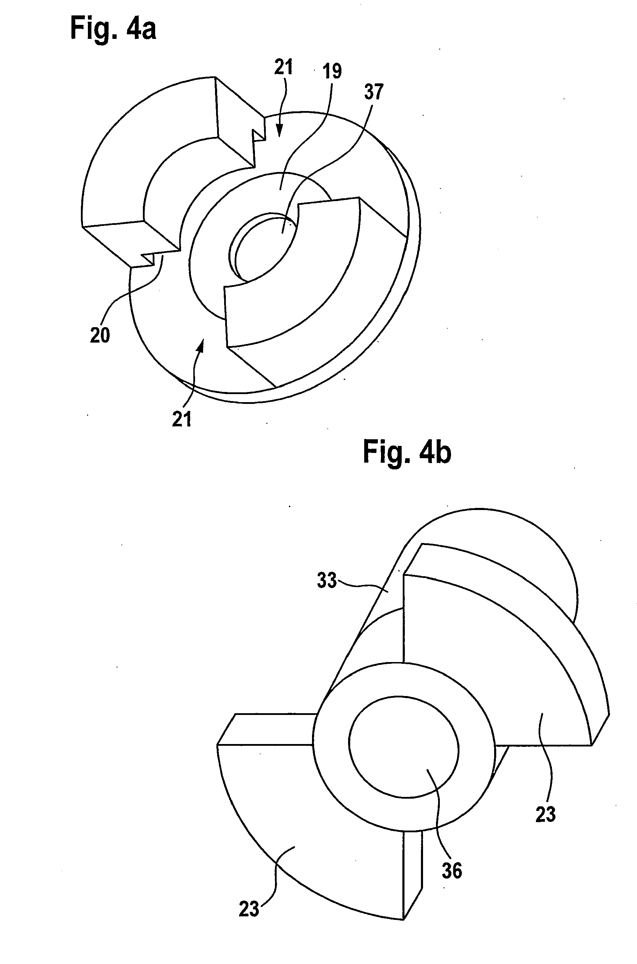

Die Fig. 2 und 3 zeigen die Hydraulische Kupplung 4 im Detail. Eine Steckbuchse 16 nimmt einen Stecker 15 auf und bildet so die Hydraulische Kupplung 4. Die Steckbuchse 16 weist dazu eine abgestufte axiale Bohrung auf, der Stecker 15 hat einen entsprechend abgestuften Außendurchmesser. Zwischen Stecker 15 und Steckbuchse 16 ist eine Dichtung 17 angeordnet, die beispielsweise ein O-Ring o. dgl. sein kann. Der Innendurchmesser DI der Steckbuchse 16 und der Außendurchmesser di des darin eingeführten Teiles des Steckers 15 bilden eine Spielpassung. Der Stecker 15 hat eine Durchgangsbohrung 36, entsprechend hat die Steckbuchse 16 eine Durchgangsbohrung 37. An den Außendurchmesser di der Steckbuchse 16 schließt sich ein Absatz 18 an, in dem die Dichtung 17 zu liegen kommt. Daran schließt sich ein Bajonett-Verschluss 24 an, der den Stecker 15 der Steckbuchse 16 in axialer Richtung verriegelt. Der Bajonett-Verschluss ist in Fig. 4 näher dargestellt. In Fig. 4a ist dazu ein Schnitt gemäß II-II durch die Steckbuchse 16, in Fig. 4b ein entsprechender Schnitt durch den Stecker 15 dargestellt. Die Steckbuchse weist eine Bohrung 19 auf, in die sich in axialer Richtung in Einführrichtung des Steckers 15 eine ringnutförmige Hinterschneidung 20 anschließt. Die Hinterschneidung ist mittels mehrerer Durchbrüche 21 mit dem entgegen der Einführrichtung des Steckers davor liegenden Bohrung 22, die einen Durchmesser größer oder gleich dem Innendurchmesser der ringnutförmigen Hinterschneidung 20 aufweist, verbunden. Durch die Durchbrüche 21 können Flügel 23, die an den Stecker 15 angeformt sind, hindurchgeführt werden. Der Außendurchmesser des Steckers 15 zwischen den Flügeln 23 entspricht dem Innendurchmesser der Steckbuchse 16 außerhalb der Durchbrüche 21. Nachdem die Flügel 23 durch die Durchbrüche 21 hindurchgeführt worden sind, können Stecker 15 und Steckbuchse 16 gegeneinander verdreht werden, so dass die Flügel 23 in der ringnutförmigen Hinterschneidung 20 außerhalb der Durchbrüche 21 zu liegen kommen und so in bekannter Art und Weise den Bajonettverschluss 24 bilden.

Zu Verdrehsicherung zwischen Stecker 15 und Steckbuchse 16 wird eine Drahtformfeder 26 in Ausnehmungen 25a und 25b der Steckbuchse 16 gesteckt. Der Stecker 15 weist dazu einen linken und rechten Freiraum 27a und 27b auf. Zwischen den beiden Freiräumen 27a, 27b ist ein Zapfen 28 angeordnet. Der steckerseitige Zapfen 28 kommt in der in Fig. 3 dargestellten Einbaulage zwischen zwei Armen 29a, 29b der Drahtformfeder 26, die durch einen Rücken 30 der Drahtformfeder 26 verbunden sind, zu liegen. Zwischen den Ausnehmungen 25a, 25b der Steckbuchse 16 verbleibt ein buchsenseitiger Zapfen 31, der wie der steckerseitige Zapfen 28 in Einbaulage zwischen den beiden Armen 29a, 29b der Drahtformfeder 26 zu liegen kommt. Die Drahtformfeder 26 weist eine linke und rechte Ausbuchtung 32a, 32b auf, die den Außendurchmesser einer Innenröhre 33 umgreifen und so eine clipsartige Verbindung zwischen Innenröhre 33 und Drahtformfeder 26 bewirken, so dass die Drahtformfeder 26 nur gegen eine Haltekraft aus der Einbaulage gezogen werden kann.

Gegenüber dem Rücken 30 sind zwei nach außen abgewinkelte Enden 34a, 34b an der Drahtformfeder 26 angeordnet, die an korrespondierenden Schrägen 35a, 35b der Steckbuchse 16 anliegen. Die abgewinkelten Enden 34a, 34b sowie die Schrägen 35a, 35b bilden zusammen eine weitere Verdrehsicherung, da die Drahtformfeder 26 auch durch den steckerseitigen Zapfen 28 und buchsenseitigen Zapfen 31 gegen Verdrehung gesichert ist. Beim Einführen der Drahtformfeder 26 in die Einbaulage dienen die abgewinkelten Enden 34a, 34b zudem dazu, die Arme 29a, 29b auseinander zu drücken, so dass sie die Innenröhre 33 umgreifen können. Wird ein in den Fig. 2 bis 4 nicht dargestelltes Steckelement zur Verbindung eines Leitungsstranges 11,12 mit dem Stecker 15 in diesen eingeführt, in diesem Fall hat der Stecker 15 die Funktion einer Steckbuchse, so dient die Drahtformfeder zusätzlich der axialen Verriegelung des Steckelementes.

Die Montage der hydraulischen Kupplung geschieht dergestalt, dass zunächst der Stecker 15 in die Steckbuchse 16 eingeführt wird, und zwar so, dass die Flügel 23 durch die Durchbrüche 21 eingeführt werden können. Sodann werden der Stecker 15 und die Steckbuchse 16 gegeneinander verdreht, so dass die Flügel 23 entlang der ringnutförmigen Hinterschneidung 20 zumindest teilweise aus den Durchbrüchen 21 herausgedreht werden. Ist die Stellung gemäß Fig. 3 erreicht, so kann die Drahtformfeder 26 durch die Ausnehmungen 25a, 25b und die Freiräume 27a, 27b eingeführt werden und kommt in Einbaulage so wie in Fig. 3 dargestellt zu liegen.

### Bezugszeichenliste

- 1: Pedal
- 2: Geberzylinder
- 3: Kupplungsausrückvorrichtung
- 4: Hydraulische Kupplung
- 5: Nehmerzylinder
- 6: Ausrückmechanik
- 7: Kupplung
- 8: Brennkraftmaschine
- 9: Kurbelwelle
- 10: Getriebeeingangswelle
- 11: erster Leitungsstrang
- 12: zweiter Leitungsstrang
- 13: Druckmediumsleitung
- 14: Nachlaufbehälter
- 15: Stecker
- 16: Steckbuchse
- 17: Dichtung
- 18: Absatz
- 19: Bohrung
- 20: Ringnutförmige Hinterschneidung
- 21: Durchbrüche
- 22: Bohrung
- 23: Flügel
- 24: Bajonettverschluss
- 25a, 25b: Ausnehmungen
- 26: Drahtformfeder
- 27a, 27b: Freiraum
- 28: Steckerseitiger Zapfen
- 29a, 29b: Arme
- 30: Rücken
- 31: Buchsenseitiger Zapfen
- 32a, 32b: Ausbuchtungen
- 33: Innenröhre
- 34a, 34b: Abgewinkelte Enden
- 35a, 35b: Schrägen
- 36: Durchgangsbohrung
- 37: Durchgangsbohrung
- DI: Innendurchmesser
- di: Außendurchmesser

## Patentansprüche

1. Hydraulische Kupplung umfassend einen Stecker (15) sowie eine Steckbuchse (16), wobei die Kupplung einen Bajonettverschluss (23, 24, 25) umfasst, der vermittels eines mit der Kupplung verbindbaren Mittels (26) zur Verdrehsicherung gegen Verdrehung gesichert ist, und das Mittel zur Verdrehsicherung ein einsteckbares Federelement (26) ist, **dadurch gekennzeichnet, dass** das Federelement eine Drahtformfeder (26) ist, und die Drahtformfeder (26) zwei Arme (29a, 29b) umfasst, die durch einen Rücken (30) miteinander verbunden sind und die Steckbuchse (16) einen buchsenseitigen Zapfen (31) aufweist, der die Einschubtiefe der Drahtformfeder (26) in Einbaulage begrenzt.

2. Hydraulische Kupplung nach Anspruch 1, **dadurch gekennzeichnet, dass** die Drahtformfeder (26) in mindestens eine Ausnehmung (25a, 25b) der Steckbuchse (16) einbringbar ist und in mindestens einen Freiraum (27a, 27b) des Steckers (15) eingreift.

3. Hydraulische Kupplung nach einem der vorhergehenden Ansprüche, **dadurch gekennzeichnet, dass** der Stecker (15) einen steckerseitiger Zapfen (28) aufweist, der in Einbaulage zwischen den Armen (29a, 29b) der Drahtformfeder (26) liegt.

4. Hydraulische Kupplung nach einem der vorhergehenden Ansprüche, dass die Drahtformfeder (26) zwei abgewinkelte Enden (34a, 34b) aufweist, die in Einbaulage an radialen Schrägen (35a, 35b) des Steckers (15) anliegen.

5. Hydraulische Kupplung nach einem der vorhergehenden Ansprüche, dass die Drahtformfeder (26) mindestens eine Ausbuchtung (32a, 32b) aufweist, die eine korrespondierende Ausbuchtung (33) des Steckers (15) nach Art eines Clips umgreift und die Drahtformfeder (26) in radialer Richtung festlegt.

## Claims

1. Hydraulic coupling comprising a plug (15) and a plug socket (16), wherein the coupling comprises a bayonet fixing (23, 24, 25) which is locked against rotation by a means (26), which can be connected to the coupling, for rotational locking, and the means for rotational locking is a spring element (26) which can be plugged in, **characterized in that** the spring element is a wireform spring (26), and the wireform spring (26) comprises two arms (29a, 29b) which are connected to one another by a spine (30), and the plug socket (16) has a socket-side peg (31) which limits the insertion depth of the wireform spring (26) in the installed position.

2. Hydraulic coupling according to Claim 1, **characterized in that** the wireform spring (26) can be inserted into at least one recess (25a, 25b) of the plug socket (16) and engages into at least one free space (27a, 27b) of the plug (15).

3. Hydraulic coupling according to one of the preceding claims, **characterized in that** the plug (15) has a plug-side peg (28) which, in the installed position, lies between the arms (29a, 29b) of the wireform spring (26).

4. Hydraulic coupling according to one of the preceding claims, **characterized in that** the wireform spring (26) has two angled ends (34a, 34b) which, in the installed position, bear against radial bevels (35a, 35b) of the plug (15).

5. Hydraulic coupling according to one of the preceding claims, **characterized in that** the wireform spring (26) has at least one bulge (32a, 32b) which engages in the manner of a clip around a corresponding bulge (33) of the plug (15) and fixes the wireform spring (26) in the radial direction.

## Revendications

1. Raccord hydraulique comprenant un connecteur enfichable (15) ainsi qu'une douille d'enfichage (16), le raccord comprenant une fermeture à baïonnette (23, 24, 25), qui est fixée contre la rotation au moyen d'un moyen (26) de fixation en rotation pouvant être connecté au raccord, et le moyen de fixation en rotation étant un élément de ressort enfichable (26), **caractérisé en ce que** l'élément de ressort est un ressort filiforme (26) et le ressort filiforme (26) comprend deux bras (29a, 29b) qui sont connectés l'un à l'autre par une partie centrale (30), et la douille d'enfichage (16) présentant un tourillon (31) du côté de la douille qui limite la profondeur d'enfoncement du ressort filiforme (26) dans la position d'installation.

2. Raccord hydraulique selon la revendication 1, **caractérisé en ce que** le ressort filiforme (26) peut être introduit dans au moins un évidement (25a, 25b) de la douille d'enfichage (16) et vient en prise dans au moins un espace libre (27a, 27b) du connecteur enfichable (15).

3. Raccord hydraulique selon l'une quelconque des revendications précédentes, **caractérisé en ce que** le connecteur enfichable (15) présente un tourillon (28) du côté du connecteur, qui se situe dans la position d'installation entre les bras (29a, 29b) du ressort filiforme (26).

4. Raccord hydraulique selon l'une quelconque des revendications précédentes, **caractérisé en ce que** le ressort filiforme (26) présente deux extrémités coudées (34a, 34b) qui s'appliquent dans la position d'installation contre des biseaux radiaux (35a, 35b) du connecteur enfichable (15).

5. Raccord hydraulique selon l'une quelconque des revendications précédentes, **caractérisé en ce que** le ressort filiforme (26) présente au moins un bombement (32a, 32b) qui vient en prise autour d'un bombement correspondant (33) du connecteur enfichable (15) à la manière d'un clip, et qui fixe le ressort filiforme (26) dans la direction radiale.
